# EUROPÄISCHE PATENTSCHRIFT

(11) **EP 1 111 072 B1**
(45) Veröffentlichungstag und Bekanntmachung des Hinweises auf die Patenterteilung: **13.03.2002**
(21) Anmeldenummer: 99125688.4
(22) Anmeldetag: 22.12.1999
(51) Int. Cl.: C21C 5/52, F27D 11/10, H05B 7/10

(54) **Befestigung einer Bodenelektrode an einem Lichtbogenofen**
Fastening arrangement for bottom electrode in an electric arc furnace
Fixation d'une électrode de sole au four à arc

(43) Veröffentlichungstag der Anmeldung: 27.06.2001
(73) Patentinhaber: Tung Ho Steel Enterprise Corporation, Taipei (TW)
(72) Erfinder: Lin,Her Leu, Miao-Li City (TW); Wei,Ping Lee, Tong-Shiau Jenn, Miao-Li (TW)
(74) Vertreter: Basfeld, Rainer, Dr. Dipl.-Phys.

(56) Entgegenhaltungen:
- US-A- 5 153 896
- US-A- 5 287 382

## Beschreibung

Elektrische Lichtbogenöfen werden in umfangreichen Maße bei der Herstellung von Metallen, insbesondere Stahl, verwendet. Allgemein gesprochen, wird der Effekt unterschiedlicher Elektroden, die im Kopf- und Bodenbereich eines Behälters angeordnet sind, ausgenutzt, um einen Lichtbogen zu erzeugen und das in dem Behälter befindliche metallische Rohmaterial zu schmelzen.

Eine derartiger Lichtbogenofen mit einer Bodenelektrode ist aus der US-PS 5,153,896 bekannt. Hier wird ein Lichtbogenofen mit einer Bodenelektrode beschrieben, wobei eine spezielle abdichtende Wand zwischen der Schmelze und der Befestigungszone der Elektrode vorgesehen ist, um einer Beschädigung der elektrischen Abschirmung entgegenzuwirken und somit die Standzeit des Lichtbogenofens zu verlängern.

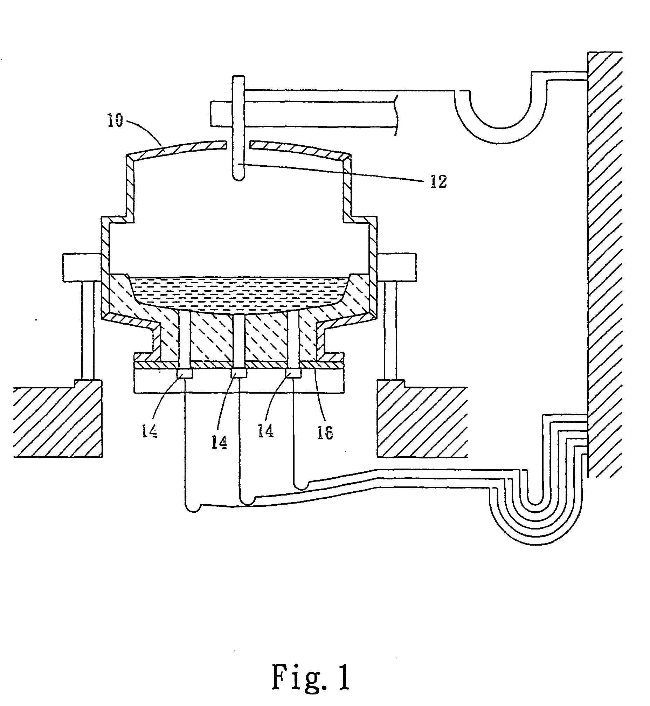

Ein Beispiel eines elektrischen Lichtbogenofens wird in der US-PS 5,191,592, eingetragen am 2. März 1993 für Robert A. Janiak und Nicolas Meysson und angemeldet für Clecim, offenbart. Die Figur 1 der beigefügten Zeichnungen zeigt die generelle Struktur eines elektrischen Lichtbogenofens. Der elektrische Lichtbogenofen umfaßt einen Behälter 10, eine Kopfelektrode 12, die im oberen Bereich des Behälters 10 angeordnet ist, sowie einige Bodenelektroden 14, die an einem Bodendeckel 16 befestigt und hindurch geführt sind. Die Elektroden 12 und 14 sind mit einer Energiequelle wie beispielsweise einem elektrischen Netz verbunden, zur Erzeugung eines elektrischen Lichtbogens und zur Aufschmelzung des metallhaltigen Rohmaterials, welches sich in dem Behälter 10 befindet.

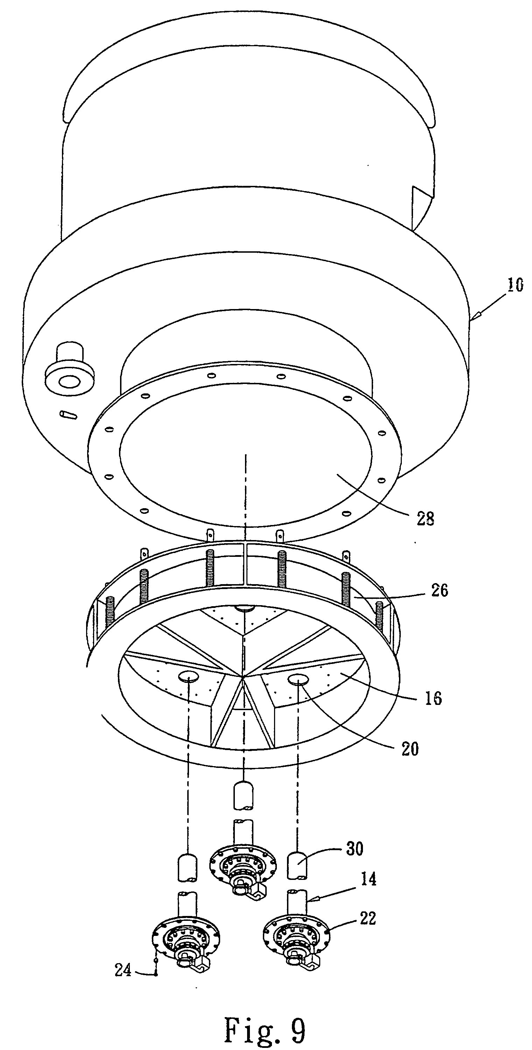

Figur 9 zeigt eine konventionelle Bodenelektrode 14 die in dem Bodendeckel 16 des Behälters 10 befestigt ist. Der Bodendeckel 16 hält eine Anzahl von Durchgangsbohrungen 20 bereit, in die Bodenelektroden 14 aufgenommen werden können.

Jede Bodenelektrode 14 ist mit einem Aufnahmemittel 22 zur Befestigung durch Bolzen 24 in den Bodendeckel 16 ausgestattet. Der Bodendeckel 16 ist durch Mittel wie Stehbolzen 26 mit der Bodenöffnung 28 verbunden, wobei die Bodenelektroden 14 zumindest abschnittsweise in den Behälter 10 hineinreichen.

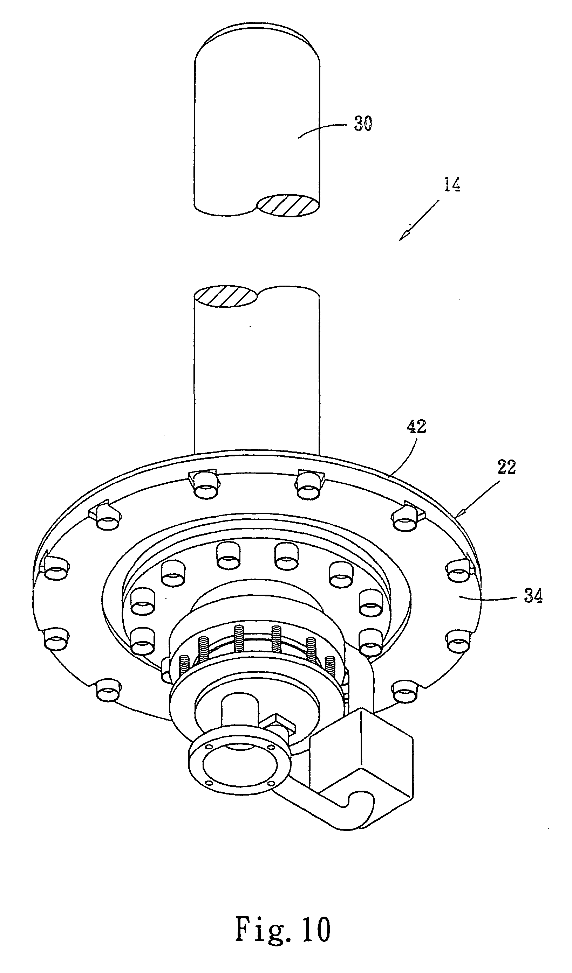

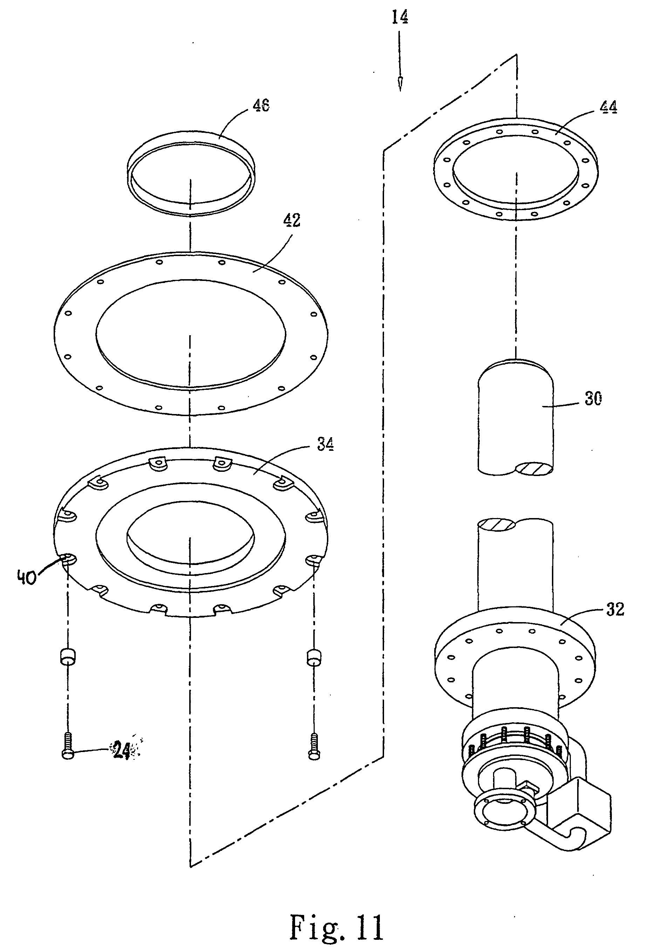

Unter Bezugnahme auf Figuren 10 bis 12, umfaßt jede Elektrode 14 einen länglichen Elektrodenkörper 30. Die Befestigungsmittel 22 umfassen eine umlaufende Flanke 32, die sich von dem unteren Abschnitt des Elektrodenkörpers 30 erstreckt. Ein ringförmiges Verbindungselement 34 ist auf der umlaufenden Flanke 32 angeordnet und durch Bolzen 36 gesichert. Das ringförmige Verbindungselement 34 besitzt einen Innendurchmesser, der substantiell größer als der Außendurchmesser des Elektrodenkörpers 30 ist, wobei hierdurch eine ringförmige Aussparung 38 dazwischen entsteht. Das ringförmige Verbindungselement 34 umfaßt eine Vielzahl von Bohrungen 40, die zur Aufnahme von Bolzen 24 und damit zur Befestigung des ringförmigen Verbindungselements 34 mit dem Bodendeckel 16 geeignet sind. Das ringförmige Verbindungselement 34 besitzt einen Außendurchmesser, der größer als der Innendurchmesser der korrespondierenden Bohrung 20 des Bodendeckels 16 ist, so daß die Bohrung 20 vollständig geschlossen werden kann.

Ein erster Isolationsring 42 ist zwischen dem Bodendeckel 16 des Behälters 10 und dem ringförmigen Verbindungselement 34 angeordnet. Ein zweiter Isolationsring 44 ist zwischen dem ringförmigen Verbindungselement 34 und der umlaufenden Flanke 32 der Bodenelektrode 14 zur elektrischen Isolation der Bodenelektrode 14 von dem Behälter 10 vorgesehen. Ein Isolationskragen 46 ist in dem inneren Durchmesser des ringförmigen Verbindungselements 34 angebracht.

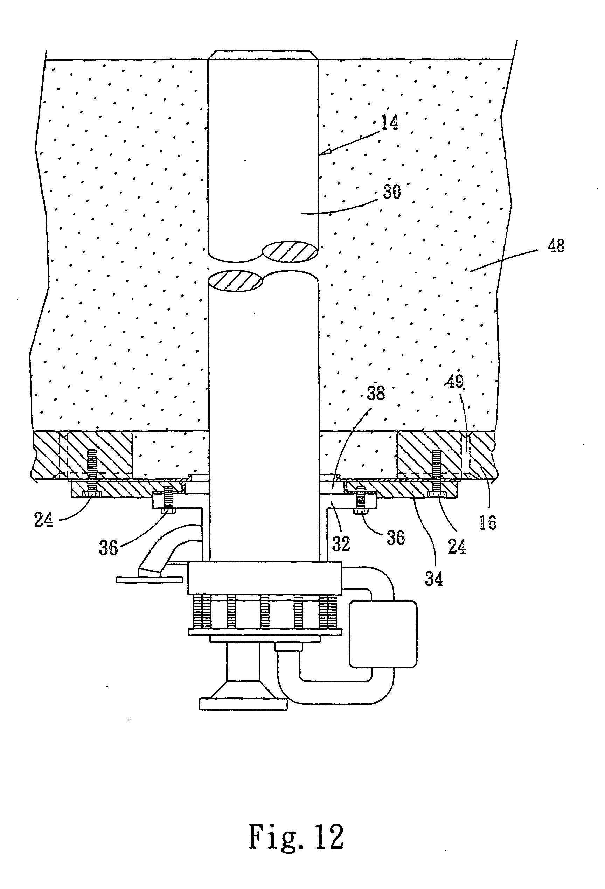

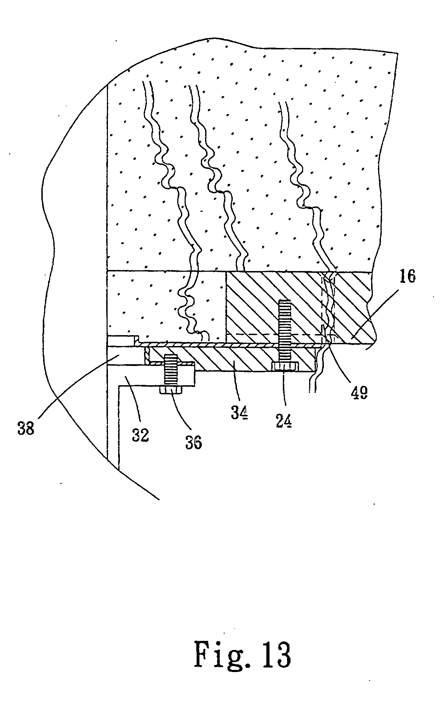

Auf dem Bodendeckel 16 des Behälters 10 ist ein feuerfestes Material 48 in Puderform zum Schutz des Behälters 10, wie in Fig. 12 und 13 dargestellt, vorgesehen. Während der Herstellung werden Schwermetallverunreinigungen wie Blei aufgeschmolzen und durchdringen die feuerfeste Puderschicht 48 um in Richtung des Bodendeckels 16, wie durch Kurvenlinien in Fig. 13 dargestellt, zu sinken. Es sind Abflußbohrungen 49 in dem Bodendeckel vorgesehen, durch welche die Verunreinigungen aus dem Kessel 10 fließen können. Gewöhnlich fließen die Verunreinigungen durch Abflußbohrungen 49 aus dem Behälter 10, wobei sie nicht zufriedenstellend geleitet werden und möglicherweise mit den Bodenelektroden 14 in Kontakt geraten können. Während das geschmolzene Metall in dem Behälter 10 und die Bodenelektroden im allgemeinen nicht das gleiche elektrische Potential aufweisen, bewirkt ein Kontakt der beiden Medien einen Kurzschluß, der den Ofen beschädigt, die Standzeit herabsetzt und die Betriebskosten erhöht. Der elektrische Lichtbogenofen, der in der Clecim Patentschrift offenbart ist, muß nach 1500 Chargen gewartet und die Bodenelektroden 14 müssen ausgetauscht werden. Dies bedeutet eine Erhöhung der Kosten.

Somit wäre es vorteilhaft eine Bodenelektrode für eine elektrischen Lichtbogenofen bereitzustellen, welche nicht die oben angesprochenen Probleme aufweist.

Diesbezüglich ist ein Ziel der vorliegenden Erfindung einen Lichtbogenofen mit einer Bodenelektrode zur Verfügung zu stellen, die mit einem Leitmittel für Verschmutzungen ausgestattet ist, um den Verschmutzungsstrom aus dem Ofen zu leiten ohne mit der Bodenelektrode in Berührung zu kommen, damit das Kurzschlußproblem zu umgehen und um letztendlich Kosten zu senken.

Ein weiteres Ziel der vorliegenden Erfindung ist einen Lichtbogenofen mit einer Bodenelektrode zur Verfügung zu stellen, die eine längere Standzeit aufweist und somit die Kosten senkt.

Zur Erreichung der oben beschriebenen Ziele, in Übereinstimmung mit der vorliegenden Erfindung, ist ein Lichtbogenofen mit einer Bodenelektrode vorgesehen, die einen Elektrodenkörper aufweist, der sich durch eine Bohrung im Bodenbereich des Ofens erstreckt. Eine umlaufende Flanke ist um den unteren Bereich der Elektrode angeformt, an der das ringförmige Verbindungselement befestigt ist. Das Verbindungselement formt einen ringförmigen Kanal, der durch die inneren und äußeren Wände gebildet wird, von wo sich die inneren und äußeren Flanken radial in unterschiedliche Richtungen erstrecken. Die innere Flanke ist mit der umlaufenden Flanke des Elektrodenkörpers durch Bolzen verbunden. Die äußere Flanke ist mit dem Ofenboden zur Befestigung der Bodenelektrode an dem Ofenboden befestigt. Der Kanal ist zwischen der umgebenden Flanke des Elektrodenkörpers und dem Innendurchmesser der Bohrung, die in dem Ofenboden angebracht ist, zur Erhöhung der radialen Distanz zwischen dem Elektrodenkörper und der Bohrung des Ofenbodens vorgesehen. Isolierende Bestandteile sind auf und unter der umgebenden Flanke des Elektrodenkörpers zur elektrischen Isolation der Elektrode von dem Ofenboden vorgesehen.

Die vorliegende Erfindung wird für den Fachmann offensichtlich, durch Lesen der Beschreibung einer bevorzugten Ausführungsform, unter Bezugnahme auf die folgenden Zeichnungen, wobei
- Fig. 1: eine schematische Ansicht eines Gleichstrom-Lichtbogenofens;
- Fig. 2: eine Explosionsdarstellung eines Lichtbogenofens mit eingebauten erfindungsgemäßen Bodenelektroden;
- Fig. 3: eine perspektivische Ansicht einer erfindungsgemäßen Bodenelektrode eines Lichtbogenofens;
- Fig. 4: eine Explosionsdarstellung einer erfindungsgemäßen Bodenelektrode eines Lichtbogenofens;
- Fig. 5: eine Querschnittdarstellung eines Ausschnitts eines elektrischen Lichtbogenofens zur Verdeutlichung der räumlichen Beziehung zwischen der erfindungsgemäßen Bodenelektrode und dem Bodendeckel;
- Fig. 6: eine Abbildung gemäß Fig. 5 mit Darstellung des Verlaufs der Verschmutzung in Richtung der Bodenelektrode eines elektrischen Lichtbogenofens;
- Fig. 7: eine Explosionsdarstellung einer erfindungsgemäßen Bodenelektrode in einer zweiten Ausführungsform;
- Fig. 8: eine Querschnittdarstellung eines Ausschnitts eines elektrischen Lichtbogenofens zur Darstellung der räumlichen Beziehung zwischen einer zweiten erfindungsgemäßen Ausführungsform der Bodenelektrode und dem Bodendeckel;
- Fig. 9: eine Explosionsdarstellung eines konventionellen elektrischen Lichtbogenofens;
- Fig. 10: eine perspektivische Ansicht einer konventionellen Bodenelektrode eines konventionellen Lichtbogenofens;
- Fig. 11: eine Explosionsdarstellung einer konventionellen Bodenelektrode;
- Fig. 12: eine Querschnittdarstellung eines Abschnitts eines konventionellen Lichtbogenofens zur Verdeutlichung der räumlichen Beziehung zwischen der Bodenelektrode und dem Bodendeckel eines elektrischen Lichtbogenofens; und
- Fig. 13: eine Skizze gemäß Fig. 12 welche zeigt, wie die Verschmutzung in Richtung der konventionellen Bodenelektrode fließt
darstellt.

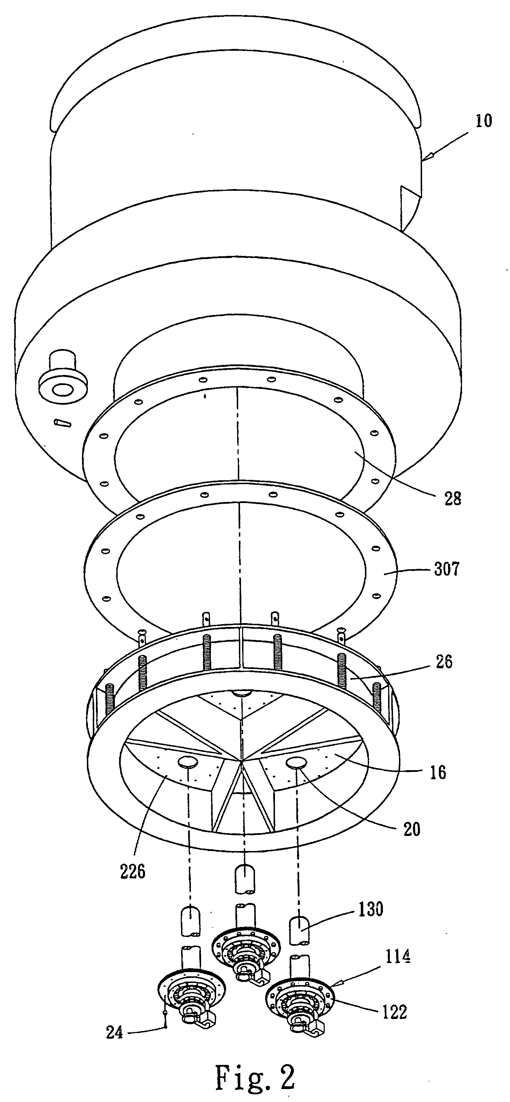

Unter Bezugnahme auf die Zeichnungen und insbesondere zu Fig. 2, ist ein elektrischer Lichtbogenofen, umfassend einen Behälter 10, darin eingebaute erfindungsgemäße Bodenelektroden, generell gekennzeichnet durch das Bezugszeichen 114, dargestellt, wobei der elektrische Lichtbogenofen 10 eine Bodenöffnung 28 umfaßt, die mit einem Bodendeckel 16, welcher mit Befestigungsmitteln 26 zum Verschluß der Öffnung 28 versehen ist, verschlossen werden kann. Der Bodendeckel 16 umfaßt eine Vielzahl von Durchgangsbohrungen 20 zur Aufnahme der Bodenelektroden 114. Jede Bodenelektrode 114 hat Befestigungsmittel 122, um mit dem Bodendeckel 16 durch Bolzen 24 verbunden zu werden, wobei es der Bodenelektrode 114 ermöglicht wird, sich in den Behälter 10 zu erstrecken.

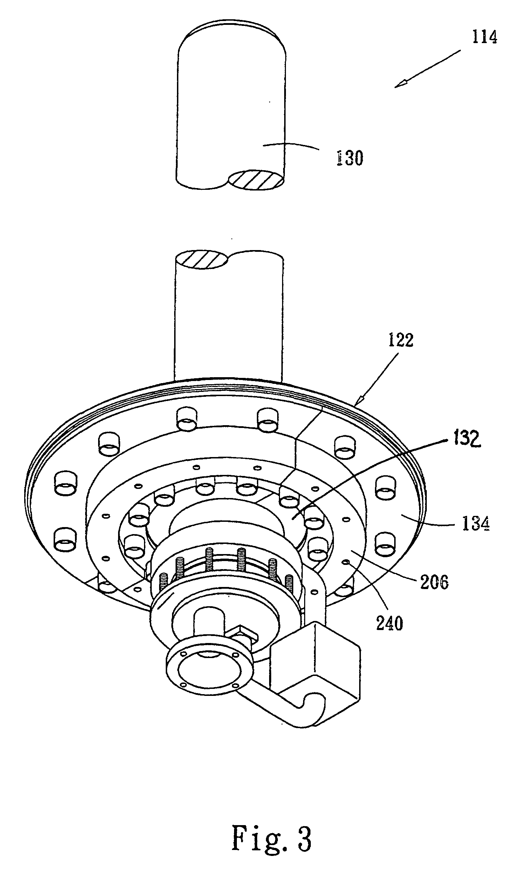

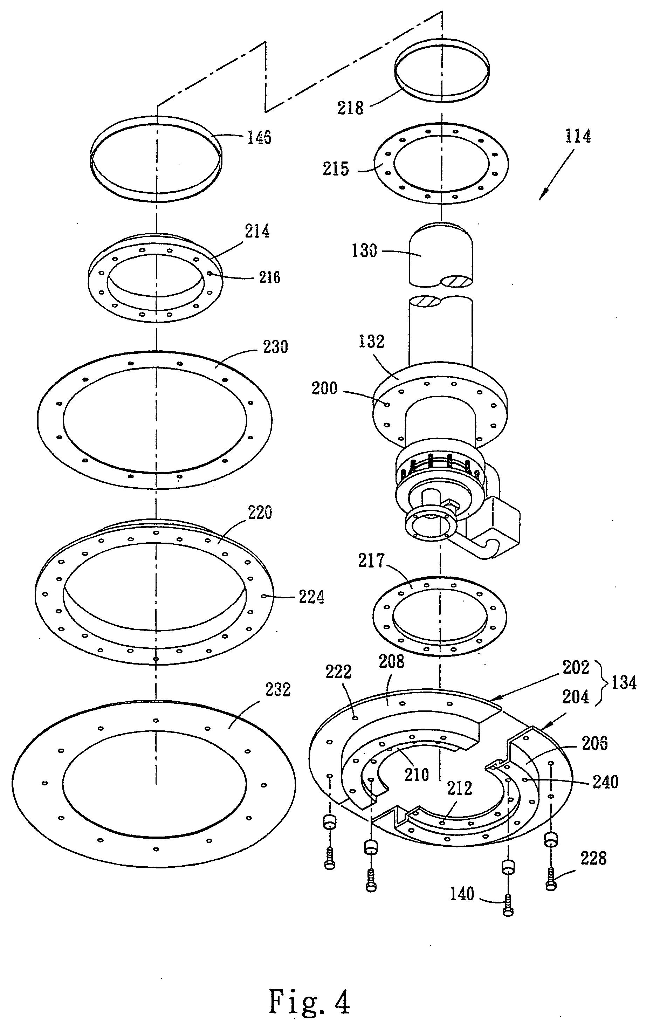

Wie in den Figuren 3 bis 5 dargestellt, umfaßt jede Bodenelektrode 114 einen länglichen Elektrodenkörper 130 und Befestigungsmittel 122, bestehend aus einer umlaufenden Flanke 132, die im unteren Abschnitt des Elektrodenkörpers 130 angeordnet ist und in der Kühlschlangen eingearbeitet sind, um die Bodenelektrode 114 auf einem vorteilhaften Temperaturniveau zu halten. Dies ist dem Fachmann bekannt und es bedarf keiner weiteren Erklärungen.

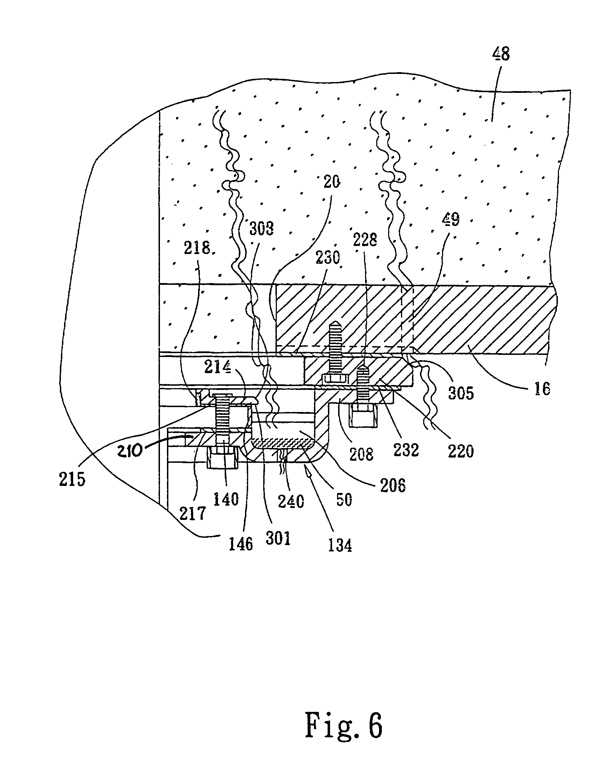

Ein ringförmiges Verbindungselement 134 ist unterhalb der umlaufenden Flanke 132 des Elektrodenkörpers 130 angeordnet. In der dargestellten Ausführungsform besteht das ringförmige Verbindungselement 134 aus zwei halbrunden Hälften 202, 204. Dennoch kann das ringförmige Verbindungselement 134 ebenfalls einteilig ausgeführt sein. Das ringförmige Verbindungselement 134 formt eine koaxial ausgedehnte Ringschulter (nicht gekennzeichnet), die einen Aufnahmekanal 206 in der Schulter umfaßt, der durch die inneren und äußeren Wände (nicht gekennzeichnet) gebildet wird, welche substantiell koaxial zum ringförmigen Verbindungselement 134 verlaufen. Eine äußere Flanke 208 und eine innere Flanke 210 erstrecken sich in unterschiedlichen Richtungen von den äußeren und inneren Wänden des Kanals 206. Die innere Flanke 210 ist über Bolzenmittel 140 an der umlaufenden Flanke 132 des Elektrodenkörpers 130 gesichert, die sich durch die Bohrungen 212 erstrecken, wobei diese in der inneren Flanke 210 und die Bohrungen 200 in der umlaufenden Flanke 132 angeordnet sind, wobei die innere Wand des Kanals 206 substantiell mit einer außen umlaufenden Fläche (definiert einen äußeren Durchmesser) des umlaufenden Rings 132 ausgestattet ist, so daß die Verschmutzung wie beispielsweise Blei, gemächlich in den Kanal 206 ausgeschwämmt wird, so wie es in Fig. 6 dargestellt ist. Abflußbohrungen 240 sind im Boden des Kanals 206 zum Abfließen des geschmolzenen Bleis aus dem elektrischen Lichtbogenofen vorgesehen.

Ein Befestigungsring 214, der innere und äußere umlaufende Oberflächen und eine Vielzahl von Durchgangsbohrungen 216 aufweist, ist durch Bolzen 140, welche sich durch die Bohrungen 216 erstrecken, mit der umlaufenden Flanke 132 gesichert. Weiterhin sind Isolierringe 215, 217 jeweils zwischen der umlaufenden Flanke 132 und dem Befestigungsring 214, sowie zwischen der umlaufenden Flanke 132 und der inneren Flanke 213 des ringförmigen Verbindungselements 134 zwischengeschaltet. Ein Isolationskragen 146 ist über der äußeren umlaufenden Oberfläche der umlaufenden Flanke 132 angebracht und sicher den Isolationsringen 215, 217 zwischengeschaltet, wobei die umlaufende Flanke 132 durch die Isolationsringe 215, 217 und den Isolationskragen 146 abgeschirmt wird. Ein zweiter Isolationskragen 218 ist über der inneren umlaufenden Oberfläche des Befestigungsrings 214 vorgesehen, wobei dieser den Befestigungsring 214 und die umlaufende Flanke 132 des Elektrodenkörpers 130 elektrisch voneinander isoliert.

Unter Bezugnahme auf Figur 6, in Verbindung mit der vorliegenden Erfindung, ist der Befestigungsring 214 derart dimensioniert, daß sich ein äußerer Randabschnitt 301 in der Nähe der äußeren umlaufenden Oberfläche von dort radial hinter der äußeren umlaufenden Oberfläche der umlaufenden Flanke 132 in einer substantiellen Distanz (namentlich erstreckend in den Kanal 206) erstreckt, wobei ein stufenförmiger Ansatz zwischen dem Befestigungsring 214 und der umlaufenden Flanke 132 vorgesehen ist, um zu vermeiden, daß das geschmolzene Blei 50 einen kontinuierlichen Strom zwischen dem Befestigungsring 214 und der umlaufenden Flanke 132 ausbildet sondern das geschmolzene Blei dazu bewegt, diskrete Flüssigkeitstropfen in den Kanal 206 auszubilden. Durch Eliminieren des kontinuierlichen Stroms geschmolzenen Bleis zwischen dem Befestigungsring 214 und der umlaufenden Flanke 132, wird ein Kurzschluß zwischen dem geschmolzenen Blei in dem Behälter 10 und der Bodenelektrode 114 vermieden, wodurch sich effektiv die Standzeit der Bodenelektrode 114 verlängert. Vorzugsweise ist eine geneigte Oberfläche 303 an der äußeren umlaufenden Oberfläche des Befestigungsrings vorgesehen, um das geschmolzene Blei in den Kanal 206 zu leiten.

Ein Verbindungsring 220 umfaßt innere und äußere umlaufende Oberflächen die zwischen die äußere Flanke 208 des Verbindungsrings 134 und dem Bodendeckel 16 geschaltet sind. In der abgebildeten Ausführungsform bilden der Verbindungsring 220 und das ringförmige Verbindungselement 134 zusammen das Befestigungsmittel 122 der Bodenelektrodenanordnung 114. Axial ausgerichtete Bohrungen 222, 224, 226 sind jeweils in der äußeren Flanke 208 des ringförmigen Verbindungselements 134 des Verbindungsrings 220 und dem Bodendeckel 16 des Behälters zur Aufnahme der Bolzen 228 angeordnet, welche das ringförmige Verbindungselement 134 und den Verbindungsring 220 mit dem Bodendeckel 16 sichert, wodurch die Bodenelektrode 114 an dem Behälter 10 des elektrischen Lichtbogenofens befestigt wird. Vorzugsweise sind die Bohrungen 224, 226 mit einem Innengewinde zur Aufnahme der Bolzen 228 ausgestattet. Die Isolationsringe 230, 232 sind zwischen dem Verbindungsring 220 und der äußeren Flanke 208 des ringförmigen Verbindungselements 134 zur elektrischen Isolation des Bodendeckels 16 und des ringförmigen Verbindungselements 134 gegen die Verbindungsring 220 angeordnet.

In Übereinstimmung mit der vorliegenden Erfindung sind innere und äußere Randabschnitte des Verbindungsrings 220 in der Nähe der inneren und äußeren umlaufenden Oberflächen angeordnet, wobei sich diese radial in unterschiedliche Richtungen hinter den inneren und äußeren Oberflächen der äußeren Flanke 208 des ringförmigen Verbindungselements 134 erstrecken, wobei ein stufenförmiger Absatz dazwischen angeformt ist, welche in den Absichten und Funktionen ähnlich der äußeren Randabschnitte 301 des Verbindungsrings 214 ist. Kein weiteres Detail soll angegeben werden.

Vorzugsweise ist in der Nähe der äußeren umlaufenden Oberfläche des Verbindungsrings 220 eine geneigte Oberfläche 305 angeformt, die substantiell mit den Abflußbohrungen 49 in dem Bodendeckel ausgerichtet ist, um die Verschmutzung entlang der äußeren umlaufenden Oberfläche des Verbindungsrings 220 fließen zu lassen.

Darüber hinaus, im Zusammenhang mit der vorliegenden Erfindung, weisen die in dem Bodendeckel 16 angebrachten Bohrungen 20 einen Durchmesser auf, der kleiner als die innere umlaufende Oberfläche des Verbindungsrings 220 ist, wobei ein stufenförmiger Absatz zwischen dem Bodendeckel 16 und dem Verbindungsring 220 für den gleichen Zweck, einer Vermeidung der Ausbildung eines kontinuierlichen Stroms geschmolzenen Bleis, Vermeidung eines Kurzschlusses und Verlängerung der Standzeit, vorgesehen ist.

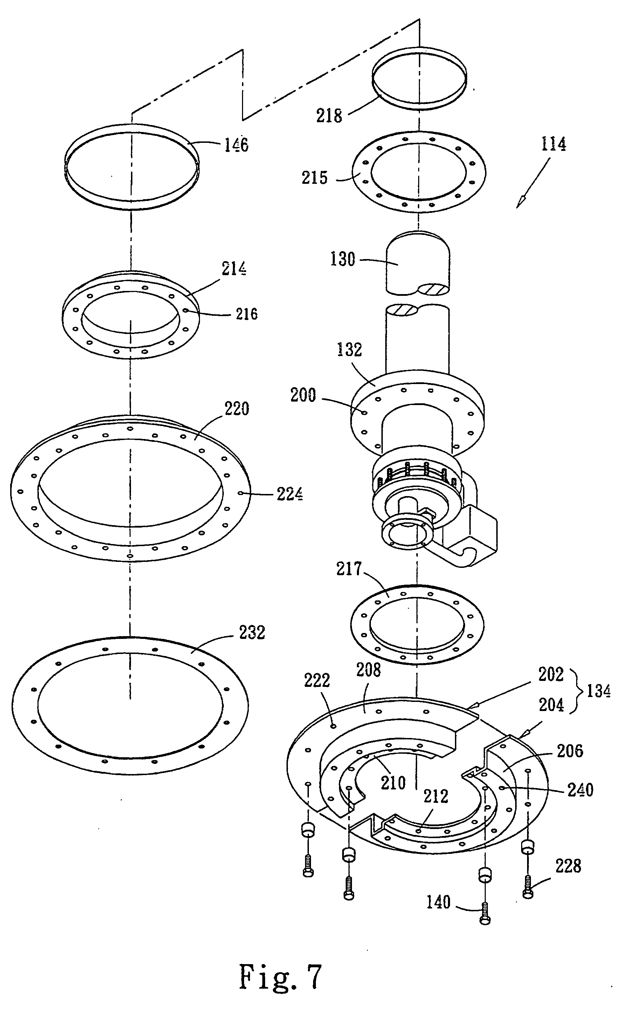

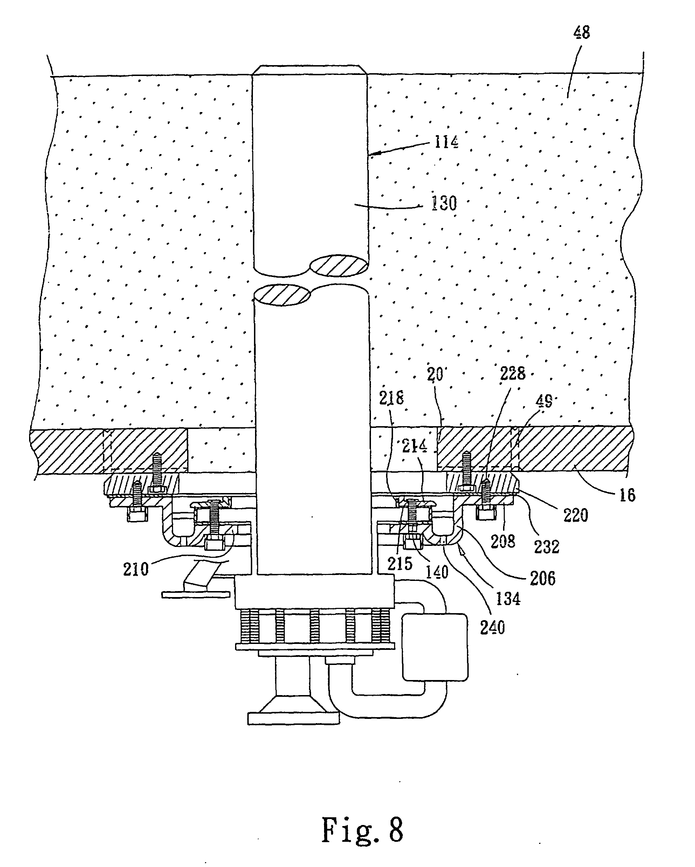

Beim täglichen Betrieb, kann der Isolationsring 230 zwischen des Verbindungsrings 220 und dem Bodendeckel wie in einer zweiten Ausführungsform in Fig. 7 und 8 dargestellt, weggelassen werden.

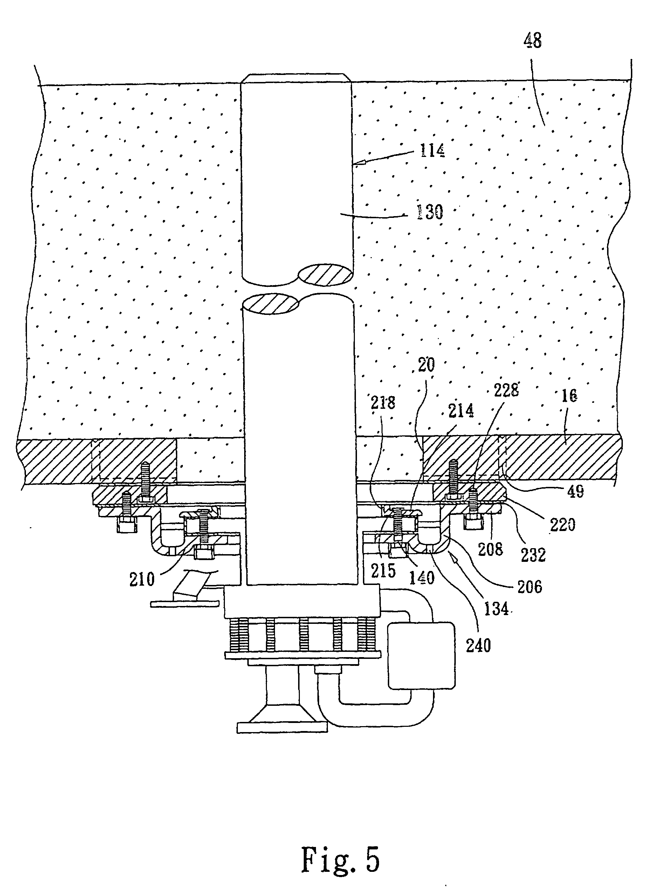

Ein feuerfestes Material 48 in Puderform ist auf dem Bodendeckel 16 des elektrischen Lichtbogenofens wie in Fig. 5 und 6 gezeigt, zum Schutz der Bodenelektroden 114 und des Behälters 10 vorgesehen.

Im Zusammenhang mit der vorliegenden Erfindung sollte ebenfalls erwähnt werden, daß durch Mittel zur Formung des Ablaufkanals 206, sowie der Vergrößerung des Abstands in radialer Richtung zwischen dem Befestigungsmittel 122 (oder dem Innendurchmesser der Bohrung 20) und des Elektrodenkörpers 130, die Wahrscheinlichkeit eines Kurzschlusses substantiell, im Vergleich zu einer konventionellen Anordnung, reduziert werden kann.

Darüber hinaus kann durch Zwischenschalten eines Isolationsringes 307 (Figur 2) zwischen dem Bodendeckel 16 und der Bodenöffnung 28 des Behälters 10, der Bodendeckel elektrisch von dem Behälter 10 zum weiteren Schutz der Bodenelektroden 114 isoliert werden.

Durch Anwendung der vorliegenden Erfindung in einem elektrischen Lichtbogenofen, kann die Standzeit signifikant auf mindestens 5.000 Chargen erweitert werden. Die Kosteneinsparung durch die Erweiterung der Standzeit der Bodenelektroden 114 und die Reduktion der Zeit für Instandhaltung sowie des Wechsels des Bodenelektroden 114 ist beachtlich.

## Patentansprüche

1. Lichtbogenofen (10) mit einer Bodenelektrode (114) umfassend:
- einen Elektrodenkörper (130), der sich durch eine im Boden (16) des elektrischen Lichtbogenofens (10) angeordnete Aufnahmeöffnung (20) erstreckt und eine um den Elektrodenkörper angeformte umlaufende Flanke (132) aufweist;
- ein Verbindungselement (134), umfassend einen ringförmigen Kanal (206), von dessen radial inneren und äußeren Seitenwänden innere (210) und äußere (208) Flanken radial abstehen, wobei zur Befestigung der Bodenelektrode (114) an dem Boden (16) des Lichtbogenofens (10) die innere Flanke (210) an der umlaufenden Flanke (132) und die äußere Flanke (208) mit dem Boden (16) des elektrischen Lichtbogenofens (10) verbunden ist und der Kanal (206) zwischen der umlaufenden Flanke (132) und einem inneren Durchmesser der Aufnahmeöffnung (20) des Bodens (16) des Lichtbogenofens (10) vorgesehen ist.

2. Lichtbogenofen nach Anspruch 1, **dadurch gekennzeichnet, daß** ein stufenförmiger Absatz zwischen der äußeren Seitenwand des Kanals (206) und dem inneren Durchmesser der Aufnahmeöffnung (20) im Boden (16) des Lichtbogenofens (10) vorgesehen ist.

3. Lichtbogenofen nach Anspruch 1 oder 2, **dadurch gekennzeichnet, daß** zwischen der äußeren Flanke (208) des Verbindungselements (134) und dem Boden des Lichtbogenofens (10) ein Verbindungsring (220) vorgesehen ist.

4. Lichtbogenofen nach Anspruch 3, **dadurch gekennzeichnet, daß** der Verbindungsring (220) eine innere umlaufende Oberfläche aufweist, die zwischen der äußeren Seitenwand des Kanals (206) und dem Innendurchmesser der Aufnahmeöffnung (20) im Boden (16) des Lichtbogenofens angeordnet ist, wobei dazwischen ein stufenförmiger Absatz vorgesehen ist.

5. Lichtbogenofen nach Anspruch 3 oder 4, **dadurch gekennzeichnet, daß** der Verbindungsring (220) eine äußere umlaufende Oberfläche mit einem Außendurchmesser größer als der Außendurchmesser der äußeren Flanke (208) des Verbindungselements (134) aufweist, wobei dazwischen ein stufenförmiger Absatz vorgesehen ist.

6. Lichtbogenofen nach Anspruch 5, **dadurch gekennzeichnet, daß** eine geneigte Fläche (305) auf der äußeren umlaufenden Oberfläche des Verbindungsrings (220) vorgesehen ist, die substantiell mit den Abflußbohrungen (240) zur Führung der Verschmutzungen beim Ausfließen aus dem Lichtbogenofen (10) fluchtet.

7. Lichtbogenofen nach einem der Ansprüche 3 bis 6, **dadurch gekennzeichnet, daß** ein Isolationsring (215) zwischen dem Verbindungsring (220) und der äußeren Flanke (208) des Verbindungselements (134) vorgesehen ist.

8. Lichtbogenofen nach einem der Ansprüche 3 bis 7, **dadurch gekennzeichnet, daß** ein Isolationsring (232) zwischen dem Verbindungsring (220) und dem Boden des Lichtbogenofens (10) vorgesehen ist.

9. Lichtbogenofen nach einem der Ansprüche 1 bis 8, **dadurch gekennzeichnet, daß** ein Isolationsring (217) zwischen der inneren Flanke (210) des Verbindungselements (134) und der umlaufenden Flanke (132) des Elektrodenkörpers (130) vorgesehen ist.

10. Lichtbogenofen nach einem der Ansprüche 1 bis 9, **dadurch gekennzeichnet, daß** ein Befestigungsring (214) an der oberen Oberfläche der umlaufenden Flanke (132) des Elektrodenkörpers (130) vorgesehen ist.

11. Lichtbogenofen nach Anspruch 10, **dadurch gekennzeichnet, daß** ein Isolationsring (230) zwischen dem Befestigungsring (214) und der umlaufenden Flanke (132) des Elektrodenkörpers (130) vorgesehen ist.

12. Lichtbogenofen nach Anspruch 11, **dadurch gekennzeichnet, daß** die umlaufende Flanke (132) eine äußere umlaufende Oberfläche aufweist über die ein Isolationskragen (218) anbringbar ist.

13. Lichtbogenofen nach einem der Ansprüche 10 bis 12, **dadurch gekennzeichnet, daß** der Befestigungsring (214) eine innere umlaufende Oberfläche aufweist, über die ein Isolationskragen (146) anbringbar ist.

14. Lichtbogenofen nach einem der Ansprüche 10 bis 13, **dadurch gekennzeichnet, daß** der Befestigungsring (214) eine äußere umlaufende Oberfläche mit einem Außendurchmesser größer als die innere Wand des Kanals (206) aufweist, wodurch eine stufenförmige Unstetigkeit dazwischen entsteht.

15. Lichtbogenofen nach einem der Ansprüche 1 bis 14, **dadurch gekennzeichnet, daß** der Kanal (206) des Verbindungselements (134) geschmolzene Verunreinigungen vom Lichtbogenofen aufnimmt, wobei mindestens eine Abflußbohrung (240) im Boden des Kanals vorgesehen ist.

16. Lichtbogenofen nach einem der Ansprüche 10 bis 15, **dadurch gekennzeichnet, daß** im Befestigungsring (214), in der umlaufenden Flanke (132) des Elektrodenkörpers (130) und in der inneren Flanke (210) des Verbindungselements (134) Bohrungen (216, 200, 212) vorgesehen sind, durch welche Bolzen (140) steckbar sind um den Befestigungsring (214), den Elektrodenkörper (130) und das Verbindungselement (134) miteinander zu verbinden.

17. Lichtbogenofen nach einem der Ansprüche 1 bis 16, **dadurch gekennzeichnet, daß** Bohrungen (222) in der äußeren Flanke (208) des Verbindungselements (134) zur Aufnahme von Bolzen (228) zur Sicherung des Verbindungselements (134) mit dem Boden des Lichtbogenofens (10) vorgesehen sind.

18. Lichtbogenofen nach einem der Ansprüche 3 bis 17, **dadurch gekennzeichnet, daß** der Verbindungsring (220) Bohrungen (224) zur Aufnahme von Bolzen (228) aufweist, welche den Verbindungsring (220) am Boden des Lichtbogenofens (10) sichern.

19. Lichtbogenofen nach einem der Ansprüche 1 bis 18, **dadurch gekennzeichnet, daß** eine Öffnung (28) im Boden (16) des Lichtbogenofens (10) vorgesehen ist, die mit eine Klappe verschließbar ist, wobei ein Isolationsring (307) zwischen der Klappe und der Bodenöffnung (28) des Lichtbogenofens (10) anbringbar ist.

20. Bodenelektrode (114) mit einem Verbindungselement (134) zur Befestigung am Boden (16) eines Lichtbogenofens, **gekennzeichnet durch** die Merkmale des Verbindungselements (134) nach einem der Ansprüche 1 bis 19.

## Claims

1. An electric arc furnace (10) with a bottom electrode (114) comprising:
• an electrode body (130) extending itself through an reception opening (20), which is arranged inside the bottom (16) of the electric arc furnace (10) and a flank (132), which is arranged to surround the electrode body;
• a bridging bond (134) comprising an annular channel (206) with inner (210) and outer (208) flanks sticking out pivotally from the also rotable arranged inner and outer sidewalls, wherein the bottom electrode (114) for its fastening on the bottom (16) of the electric arc furnace (10) shows an inner flank (210), which is connected at the surrounding flank (132), and an outer flank (208), which is fixed to the bottom (16) of the electric arc furnace (10), and wherein the channel (206) is provided between the surrounding flank (132) and an inner diameter of the reception opening (20) of the bottom (16) of the electric arc furnace (10).

2. An electric arc furnace according to Claim 1, **characterized in that** a step joint ledge is provided between the outer sidewall of the channel (206) and the inner diameter of the reception opening (20) inside the bottom (16) of the electric arc furnace (10).

3. An electric arc furnace according to Claims 1 or 2, **characterized in that** a bridging ring (220) is provided between the outer flank (208) of the bridging bond (134) and the bottom of the electric arc furnace (10).

4. Electric arc furnace according to Claim 3, **characterized in that** the bridging ring (220) provides an inner rotating surface, which is arranged between the outer side wall of the channel (206) and the inner diameter of the reception opening (20) inside the bottom (16) of the electric arc furnace, in between of which a step joint ledge is provided thereto.

5. Electric arc furnace according to Claims 3 or 4, **characterized in that** the bridging ring (220) provides an outer rotating surface with an outer diameter superior to the outer diameter of the outer flank (208) of the bridging bond (134), in between of which a step joint ledge is provided thereto.

6. An electric arc furnace according to claim 5, **characterized in that** it provides an inclined surface (305) on the outer rotating surface of the bridging ring (220), which runs substantially with the drain bores (240) for the concentrical guidance of the contamination during the flowing off the electric arc furnace (10).

7. Electric arc furnace according to one of Claims 3 to 6, **characterized in that** a sealing ring (215) is provided between the bridging ring (220) and the outer flank (208) of the bridging bond (134).

8. Electric arc furnace according to one of Claims 3 to 7, **characterized in that** a sealing ring (232) is provided between the bridging ring (220) and the bottom of the electric arc furnace (10).

9. Electric arc furnace according to one of Claims 1 to 8, **characterized in that** a sealing ring (217) is provided between the inner flank (210) of the bridging bond (134) and the surrounding flank (132) of the electrode body (130).

10. Electric arc furnace according to one of Claims 1 to 9, **characterized in that** a fastening ring (214) is provided on the upper surface of the rotating flank (132) of the electrode body (130).

11. Electric arc furnace according to claim 10, **characterized in that** a sealing ring (230) is provided between the fastening ring (214) and the rotating flank (132) of the electrode body (130).

12. Electric arc furnace according to claim 11, **characterized in that** the rotating flank (132) provides an outer surrounding surface above which a plunged boss (218) can be mounted.

13. Electric arc furnace according to one of Claims 10 to 12, **characterized in that** the fastening ring (214) provides an internal surrounding surface on which a plunged boss (146) can be mounted.

14. Electric arc furnace according to one of Claims 10 to 13, **characterized in that** the fastening ring (214) provides an outer surrounding surface with an outer diameter superior to that of the inner wall of channel (206), by means of which in between a step joint discontinuity is produced.

15. Electric arc furnace according to one of Claims 1 to 14, **characterized in that** the channel (206) of the bridging bond (134) incorporates fused impurities proceeding from the electric arc furnace and with at least one drain bore (240) being provided in the bottom of the channel.

16. Electric arc furnace according to one of Claims 10 to 15, **characterized in that** within the fastening ring (214), i.e. inside the rotating flank (132) of the electrode body (130) and inside the inner flank (210) of the bridging bond (134), are provided bores (216, 200, 212) through which bolts (140) may be plugged in in order to connect the fastening ring (214), the electrode body (130) and the bridging bond (134) with each other.

17. Electric arc furnace according to one of Claims 1 to 16, **characterized in that** bores (222) are provided in the outer flank (208) of the bridging bond (134) for the introduction of bolts (228) in order to secure the bridging bond (134) with the bottom of the electric arc furnace (10).

18. Electric arc furnace according to one of Claims 3 to 17, **characterized in that** the bridging ring (220) provides bores (224) for the introduction of bolts (228), which secure the bridging ring (220) to the bottom of the electric arc furnace (10).

19. Electric arc furnace according to one of Claims 1 to 18, **characterized in that** the bottom (16) of the electric arc furnace (10) provides an opening (28) that can be closed with a flap and to which a sealing ring (307) between the flap and the bottom opening (28) of the electric arc furnace (10) may be mounted.

20. Bottom electrode (114) with a bridging bond (134) for its fastening to the bottom (16) of an electric arc furnace, **characterised in that** the characteristics of the bridging bond (134) are according to one of Claims 1 to 19.

## Revendications

1. Four à arc (10) avec une électrode de sole (114) comprenant:
- un corps de pointe d'électrode (130), s'étendant à travers une ouverture de réception (20) disposée à l'intérieur de la sole (16) d'un four à arc électrique (10) et un flanc (132) disposé pour entourer le corps de pointe d'électrode;
- un élément de connexion (134), comprenant un canal annulaire (206), dont les parois latérales radiales intérieures (210) et extérieures (208) sont éloignées des flancs radiaux intérieurs et extérieurs, où l'électrode de sole (114) pour sa fixation à la sole (16) du four à arc électrique (10) montre un flanc intérieur (210) connecté au flanc périphérique (132), où le flanc externe (208) est connecté à la sole (16) du four à arc électrique (10) et où le canal (206) est prévu entre le flanc périphérique (132) et un diamètre intérieur de l'ouverture de réception (20) de la sole (16) du four à arc électrique (10).

2. Four à arc selon la revendication 1, **caractérisé en ce que**, une plate-forme en escalier est prévue entre la paroi latérale externe du canal (206) et le diamètre intérieur de l'ouverture de réception (20) dans la sole (16) du four à arc électrique (10).

3. Four à arc selon la revendication 1 ou 2, **caractérisé en ce que**, une bague de connexion (220) est prévue entre le flanc externe (208) de l'élément de connexion (134) et le fond du four à arc électrique (10).

4. Four à arc selon la revendication 3, **caractérisé en ce que** la bague de connexion (220) présente une surface intérieure périphérique, laquelle est disposée entre la paroi latérale externe du canal (206) et le diamètre intérieur de l'ouverture de réception (20), au fond (16) du four à arc électrique, où une platte-forme en forme d'escalier est prévue entre ceux-ci.

5. Four à arc selon la revendication 3 ou 4, **caractérisé en ce que** la bague de connexion (220) présente une surface périphérique externe ayant un diamètre externe supérieur au diamètre externe du flanc externe (208) de l'élément de connexion (134), où une plate-forma en forme d'escalier est prévue entre ceux-ci.

6. Four à arc selon la revendication 5, **caractérisé en ce que**, une surface inclinée (305) est prévue sur la surface externe périphérique de la bague de connexion (220), laquelle s'aligne substantiellement avec les trépanations de drainage (240) pour le guidage des pollutions pendant le débit du four à arc (10).

7. Four à arc selon une des revendications de 3 à 6, **caractérisé en ce que** une bague d'isolement (215) est prévue entre la bague de connexion (220) et le flanc externe (208) de l'élément de connexion (134).

8. Four à arc selon une des revendications de 3 à 7, **caractérisé en ce qu'**une bague d'isolement (232) est prévue entre la bague de connexion (220) et le fond du four à arc électrique (10).

9. Four à arc selon une des revendications de 1 à 8, **caractérisé en ce qu'**une bague d'isolement (217) est prévue entre le flanc intérieur (210) de l'élément de connexion (134) et le flanc périphérique (132) du corps de pointe d'électrode (130) .

10. Fours à arc selon une des revendications de 1 à 9, **caractérisé en ce qu'**une bague de fixage (214) est prévue sur la surface supérieure du flanc périphérique (132) du corps de pointe d'électrode (130).

11. Four à arc selon la revendication 10, **caractérisé en ce qu'**une bague d'isolement (230) est prévue entre la bague de fixage (214) et le flanc périphérique (132) du corps d'électrode (130).

12. Four à arc selon la revendication 11, **caractérisé en ce que** le flanc périphérique (132) pourvoit une surface externe périphérique sur laquelle un collier d'isolement (218) peut être installé.

13. Four à arc selon une des revendications de 10 à 12, **caractérisé en ce que**, la bague de fixage (214) présente une surface intérieure périphérique, sur laquelle un collier d'isolement (146) peut être installé.

14. Four à arc selon une des revendications de 10 à 13, **caractérisé en ce que** la bague de fixage (214) présente une surface périphérique externe ayant un diamètre externe supérieur à la paroi intérieure du canal (206), à partir de laquelle une discontinuité en forme d'escalier est formée au milieu de ceux-ci.

15. Four à arc selon une des revendications de 1 à 14, **caractérisé en ce que** le canal (206) de l'élément de connexion (134) accueille des impuretés fondues du four à arc, où au moins une trépanation de drainage (240) est prévue dans la sole du canal.

16. Four à arc selon une des revendications de 10 à 15, **caractérisé en ce que**, dans la bague de fixation (214), dans le flanc périphérique (132) du corps de pointe d'électrode (130) et dans la flanc intérieur (210) de l'élément de connexion (134) sont prévues des trépanations (216, 200, 212), par lesquelles des boulons (140) peuvent être connectés afin de relier entre eux la bague de fixation (214), le corps de pointe d'électrode (130) et l'élément de connexion (134).

17. Four à arc selon une des revendications de 1 à 16, **caractérisé en ce que**, des trépanations (222) sont prévues dans le flanc externe (208) de l'élément de connexion (134) pour recevoir des boulons (228) pour assurer l'élément de connexion (134) avec le fond du four à arc électrique (10).

18. Four à arc selon une des revendications de 3 à 17, **caractérisé en ce que**, la bague de connexion (220) présente des trépanations (224) pour recevoir des boulons (228), lesquelles assurent la bague de connexion (220) au fond du four à arc électrique (10).

19. Four à arc selon une des revendications de 1 à 18, **caractérisé en ce qu'**une ouverture (28) est prévue dans la sole (16) du four à arc électrique (10), laquelle peut être fermée à serrure, où une bague d'isolement (307) est installée entre la serrure et l'ouverture de fond (28) du four à arc électrique (10).

20. Electrode de sole (114) avec un élément de connexion (134) pour la fixation au fond (16) d'un four à arc électrique, **caractérisé par** les caractéristiques de l'élément de connexion (134) selon une des revendications de 1 à 19.
